# EUROPÄISCHE PATENTANMELDUNG

(11) **EP 1 655 935 A1**
(43) Veröffentlichungstag der Anmeldung: **10.05.2006**
(21) Anmeldenummer: 04090425.2
(22) Anmeldetag: 08.11.2004
(51) Int. Cl.: H04M 3/533, H04M 3/58

(54) **Verfahren zum Aufbau von Telekommunikationsverbindungen mittels Anrufbeantworter**

(71) Anmelder: SIEMENS AKTIENGESELLSCHAFT, 80333 München (DE)
(72) Erfinder: Berg, Dr. Andreas, 13591 Berlin (DE); Ernst, Roland, 36414 Unterbreizbach (DE); Pforr, Edgar, 99834 Gerstungen (DE); Scheibe, Hagen, 85521 Ottobrunn (DE)

(57) **Zusammenfassung**

Die Erfindung betrifft ein Verfahren zum Aufbauen von Telekommunikationsverbindungen unter Nutzung von auf einem Anrufbeantworter (VMS) gespeicherten Nachrichten. Bei diesem Verfahren wird mittels einer Vermittlungsstelle (SSP) eine erste Telekommunikationsverbindung (V1) zwischen einem ersten Kommunikationsendgerät (KEG A) und dem Anrufbeantworter aufgebaut. Über die erste Telekommunikationsverbindung wird von dem ersten Kommunikationsendgerät eine von einem zweiten Kommunikationsendgerät stammende, auf dem Anrufbeantworter gespeicherte Nachricht (N) ausgelesen. Auf ein Verbindungswunschsignal (D) des ersten Kommunikationsendgeräts hin wird von dem Anrufbeantworter ein Kennzeichen (KB) des zweiten Kommunikationsendgeräts an die Vermittlungsstelle übermittelt und die erste Telekommunikationsverbindung wird beendet. Von der Vermittlungsstelle wird das Ende der ersten Telekommunikationsverbindung erkannt; mittels des Kennzeichens des zweiten Kommunikationsendgeräts wird eine Abrechnung einer zweiten Telekommunikationsverbindung (V2) zwischen dem ersten Kommunikationsendgerät und dem zweiten Kommunikationsendgerät vorbereitet. Daraufhin wird von der Vermittlungsstelle die zweite Telekommunikationsverbindung aufgebaut.

## Beschreibung

Die Erfindung betrifft ein Verfahren zum Aufbauen von Telekommunikationsverbindungen unter Nutzung von auf einem Anrufbeantworter gespeicherten Nachrichten.

In modernen Telekommunikationssystemen werden oftmals Anrufbeantworter eingesetzt, auf denen Telekommunikationsteilnehmer eine Nachricht hinterlassen können, wenn der gewünschte Gesprächspartner einen Ruf nicht entgegennimmt. Derartige Anrufbeantworter können beispielsweise als eine externe Einheit an ein Kommunikationsendgerät (z. B. ein Telefon) angeschlossen sein, in dieses Kommunikationsendgerät integriert sein oder auch unabhängig von dem Kommunikationsendgerät in einem Telekommunikationsnetz realisiert sein. Bei der Nutzung von Anrufbeantwortern ist ein Verfahren wünschenswert, mit dem ein Telekommunikationsteilnehmer von einem Anrufbeantworter eine Nachricht abhören kann und sich daraufhin direkt mit dem Absender dieser Nachricht verbinden lassen kann.

Der Erfindung liegt die Aufgabe zugrunde, ein einfaches und flexibles Verfahren zum Aufbauen von Telekommunikationsverbindungen unter Nutzung von auf einem Anrufbeantworter gespeicherten Nachrichten anzugeben, bei dem eine zuverlässige Vergebührung der aufgebauten Telekommunikationsverbindungen ermöglicht wird.

Diese Aufgabe wird erfindungsgemäß gelöst durch ein Verfahren zum Aufbauen von Telekommunikationsverbindungen unter Nutzung von auf einem Anrufbeantworter (VMS) gespeicherten Nachrichten, wobei bei dem Verfahren mittels einer Vermittlungsstelle eine erste Telekommunikationsverbindung zwischen einem ersten Kommunikationsendgerät und dem Anrufbeantworter aufgebaut wird, über die erste Telekommunikationsverbindung von dem ersten Kommunikationsendgerät eine von einem zweiten Kommunikationsendgerät stammende, auf dem Anrufbeantworter gespeicherte Nachricht ausgelesen wird, auf ein Verbindungswunschsignal des ersten Kommunikationsendgeräts hin von dem Anrufbeantworter ein Kennzeichen des zweiten Kommunikationsendgeräts an die Vermittlungsstelle übermittelt wird, die erste Telekommunikationsverbindung beendet wird, von der Vermittlungsstelle das Ende der ersten Telekommunikationsverbindung erkannt wird, von der Vermittlungsstelle mittels des Kennzeichens des zweiten Kommunikationsendgeräts eine Abrechnung einer zweiten Telekommunikationsverbindung zwischen dem ersten Kommunikationsendgerät und dem zweiten Kommunikationsendgerät vorbereitet wird, und daraufhin von der Vermittlungsstelle die zweite Telekommunikationsverbindung aufgebaut wird. Dabei ist besonders vorteilhaft, dass von dem Anrufbeantworter ein Kennzeichen des zweiten Kommunikationsendgeräts an die Vermittlungsstelle übermittelt und daraufhin die erste Telekommunikationsverbindung beendet wird. Dies ermöglicht es der Vermittlungsstelle, mittels des Kennzeichens eine Abrechnung der zweiten Telekommunikationsverbindung vorzubereiten, bevor die zweite Telekommunikationsverbindung aufgebaut wird.

Das erfindungsgemäße Verfahren kann so ausgestaltet sein, dass von der Vermittlungsstelle die Abrechnung der zweiten Telekommunikationsverbindung vorbereitet wird, indem von der Vermittlungsstelle das Kennzeichen des zweiten Kommunikationsendgeräts an ein Abrechnungssystem übertragen wird, und von der Vermittlungsstelle nach Erhalt einer von dem Abrechnungssystem stammenden zweiten Abrechnungsnachricht die zweite Telekommunikationsverbindung aufgebaut wird. Dabei können vorteilhafterweise die Dienste eines an sich bekannten Abrechnungssystems (beispielsweise eines Prepaid- oder Postpaid-Gebührenabrechnungssystems) genutzt werden, um Gebühren für die zweite Telekommunikationsverbindung abzurechnen.

Das erfindungsgemäße Verfahren kann so ablaufen, dass durch die zweite Abrechnungsnachricht die Vermittlungsstelle angeregt wird, die zweite Telekommunikationsverbindung zu überwachen und Überwachungsinformationen an das Abrechnungssystem zu senden. Damit wird die Überwachung der zweiten Telekommunikationsverbindung (also beispielsweise die Ermittlung der Zeitdauer dieser Telekommunikationsverbindung) von dem Abrechnungssystem an die Vermittlungsstelle delegiert.

Das erfindungsgemäße Verfahren kann so ablaufen, dass nach Empfang des Kennzeichens des zweiten Kommunikationsendgeräts von dem Abrechnungssystem überprüft wird, ob für das erste Kommunikationsendgerät ein vorausbezahltes Guthaben zur Abrechnung von Telekommunikationsverbindungen vorhanden ist, und bei Vorliegen eines solchen Guthabens Informationen über das Guthaben an die Vermittlungsstelle gesendet werden. Diese Ausgestaltung des erfindungsgemäßen Verfahrens ermöglicht vorteilhafterweise eine Abrechnung der zweiten Telekommunikationsverbindung über ein voraus bezahltes Guthaben (ein sogenanntes Prepaid-Guthaben).

Das erfindungsgemäße Verfahren kann auch so ablaufen, dass vor dem Aufbau der ersten Telekommunikationsverbindung von der Vermittlungsstelle ein Kennzeichen des Anrufbeantworters an das Abrechnungssystem übertragen wird, und von der Vermittlungsstelle nach Erhalt einer von dem Abrechnungssystem stammenden ersten Abrechnungsnachricht die erste Telekommunikationsverbindung zwischen dem ersten Kommunikationsendgerät und dem Anrufbeantworter aufgebaut wird.

Das erfindungsgemäße Verfahren kann so ablaufen, dass durch die erste Abrechnungsnachricht die Vermittlungsstelle angeregt wird, die erste Telekommunikationsverbindung zu überwachen und Überwachungsinformationen an das Abrechnungssystem zu senden. Die beiden vorgenannten Ausführungsformen des erfindungsgemäßen Verfahrens ermöglichen es vorteilhafterweise, sowohl die zweite Telekommunikationsverbindung zwischen dem ersten Kommunikationsendgerät und dem zweiten Kommunikationsendgerät als auch die erste Telekommunikationsverbindung zwischen dem ersten Kommunikationsendgerät und dem Anrufbeantworter zu vergebühren (d. h. Gebühren für diese Telekommunikationsverbindungen abzurechnen). Dabei können durch unterschiedliche Ausgestaltungen der ersten Abrechnungsnachricht und der zweiten Abrechnungsnachricht verschiedene Gebührentarife für die beiden Telekommunikationsverbindungen angewandt werden.

Das erfindungsgemäße Verfahren kann auch so ablaufen, dass nach Empfang des Kennzeichens des Anrufbeantworters von dem Abrechnungssystem überprüft wird, ob für das erste Kommunikationsendgerät ein vorausbezahltes Guthaben zur Abrechnung von Telekommunikationsverbindungen vorhanden ist, und bei Vorliegen eines solchen Guthabens Informationen über das Guthaben an die Vermittlungsstelle gesendet werden. Dadurch wird vorteilhafterweise ermöglicht, die erste Telekommunikationsverbindung zwischen dem ersten Kommunikationsendgerät und dem Anrufbeantworter mittels eines voraus bezahlten Guthabens unter Verwendung eines Prepaid-Abrechnungsverfahrens gebührenmäßig abzurechnen.

Bei dem erfindungsgemäßen Verfahren kann als Verbindungswunschsignal ein DTMF-Signal verwendet werden. Durch Verwendung von DTMF-Signalen lässt sich als erstes Kommunikationsendgerät nahezu jedes Telefon einsetzen, da moderne Telefone in der Regel über die Möglichkeit der Erzeugung von DTMF-Signalen verfügen.

Das erfindungsgemäße Verfahren kann auch so ablaufen, dass nach Beendigung der zweiten Telekommunikationsverbindung von der Vermittlungsstelle eine dritte Telekommunikationsverbindung zwischen dem ersten Kommunikationsendgerät und dem Anrufbeantworter aufgebaut wird, über die eine weitere auf dem Anrufbeantworter gespeicherte Nachricht abrufbar ist. Dadurch wird dem ersten Kommunikationsendgerät ermöglicht, ohne Verfahrensunterbrechung auf dem Anrufbeantworter eventuell vorhandene weitere Nachrichten abzurufen.

Zur weiteren Erläuterung der Erfindung ist in der
Figur 1 ein Ausführungsbeispiel von Netzelementen zur Durchführung des erfindungsgemäßen Verfahrens und in
Figur 2 ein Ausführungsbeispiel eines Ablaufs des erfindungsgemäßen Verfahrens dargestellt.

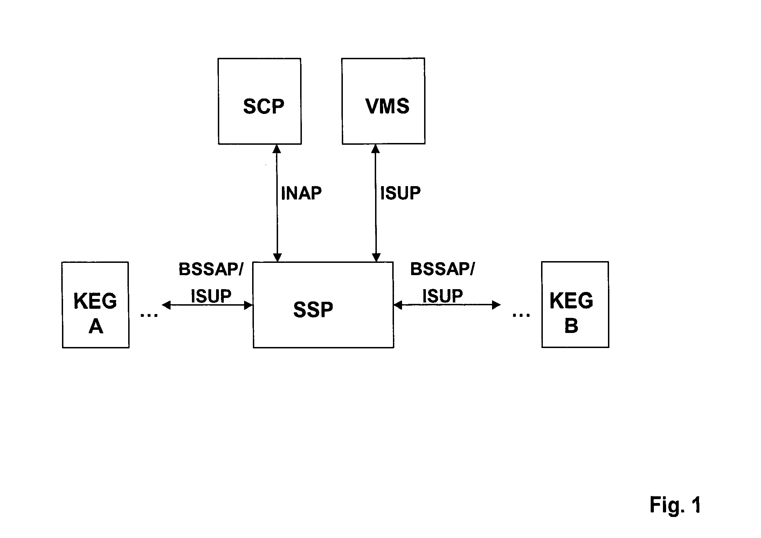

In Figur 1 sind schematisch an dem erfindungsgemäßen Verfahren beteiligte Netzelemente und Kommunikationsendgeräte dargestellt. Im linken Teil der Figur ist ein erstes Kommunikationsendgerät KEG A dargestellt, bei dem es sich im Ausführungsbeispiel um ein Mobiltelefon handelt, beispielsweise um ein Mobiltelefon nach dem Mobilfunkstandard GSM. Das erste Kommunikationsendgerät KEG A ist über eine erste Datenverbindung mit einer Vermittlungsstelle SSP (SSP = Service Switching Point) verbunden. Zwischen dem ersten Kommunikationsendgerät KEG A und der Vermittlungsstelle SSP können ggf. weitere Vermittlungsstellen zwischengeschaltet sein; die Luftschnittstelle und die Basisstation (base station) sind in der Figur nicht dargestellt. Bei der ersten Datenverbindung werden die Kommunikationsprotokolle BSSAP/ISUP (Base Station System Application Part / ISDN User Part) verwendet.

Die Vermittlungsstelle SSP ist über eine zweite Datenverbindung mit einem zweiten Kommunikationsendgerät KEG B verbunden. Bei diesem zweiten Kommunikationsendgerät KEG B kann es sich beispielsweise auch um ein Mobiltelefon handeln. Im Ausführungsbeispiel werden auch bei der zweiten Datenverbindung die Kommunikationsprotokolle BSSAP/ISUP verwendet.

Die Vermittlungsstelle SSP ist über eine dritte Datenverbindung mit einem Abrechnungssystem SCP (SCP = Service Control Point) verbunden. Im Ausführungsbeispiel weist das verwendete Telekommunikationsnetz eine Struktur eines Intelligenten Netzes IN auf: die Vermittlungsstelle wird gebildet durch einen in Intelligenten Netzen üblicherweise vorhandenen Dienstevermittlungspunkt SSP (SSP = Service Switching Point); im Ausführungsbeispiel handelt es sich bei der Vermittlungsstelle SSP um eine für Mobilfunkanwendungen vorgesehene Vermittlungsstelle (einen sogenannten Mobile-SSP, M-SSP). Das Abrechnungssystem wird gebildet durch einen in Intelligenten Netzen üblicherweise vorhandenen Dienstesteuerpunkt SCP. Die Vermittlungsstelle SSP und das Abrechnungssystem SCP kommunizieren mittels des als solches bekannten Kommunikationsprotokolls INAP (INAP = Intelligent Network Application Part).

Im Ausführungsbeispiel arbeitet das Abrechnungssystem SCP unter Nutzung von seitens der Telekommunikationsteilnehmer vorausbezahlten Guthaben; das Abrechnungssystem umfasst einen sogenannten "Prepaid-Service PPS". (In einem anderen Ausführungsbeispiel kann das Abrechnungssystem aber auch mittels nach Beendigung der Telekommunikationsverbindungen erzeugten Rechnungen oder Kontenabbuchungen arbeiten, derartige Abrechnungssysteme werden häufig auch als "Postpaid-Service"-Systeme bezeichnet.)

Weiterhin ist die Vermittlungsstelle SSP mit einem Anrufbeantworter VMS (VMS = Voice Mail System) über eine vierte Datenverbindung verbunden. Diese vierte Datenverbindung nutzt das Kommunikationsprotokoll ISUP. Anrufbeantworter werden oftmals auch als "Mailbox" bezeichnet.

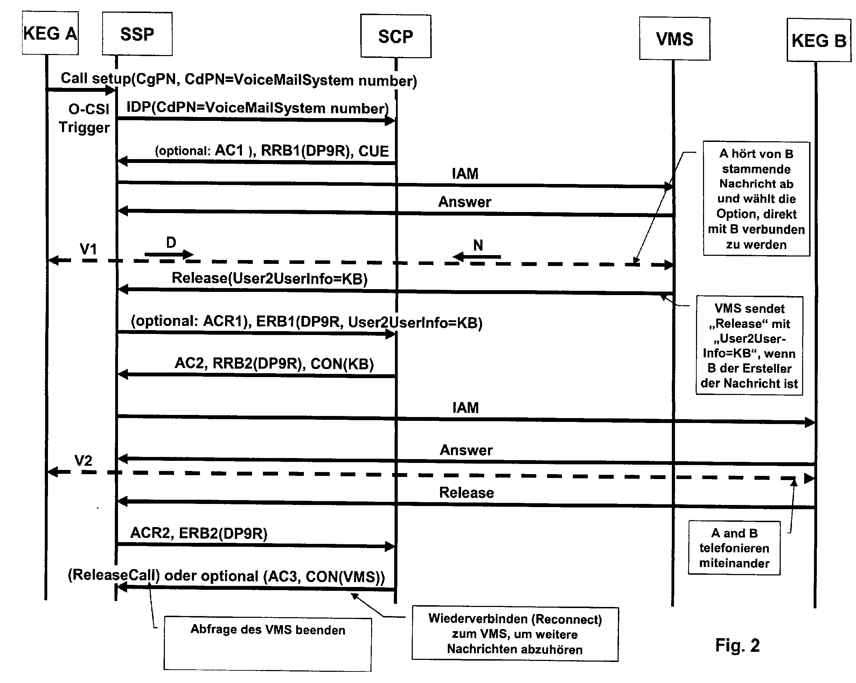

In Figur 2 ist ein Ausführungsbeispiel des erfindungsgemäßen Verfahrens dargestellt, bei dem Telekommunikationsverbindungen unter Nutzung eines vorausbezahlten Guthabens abgerechnet werden. Die an dem erfindungsgemäßen Verfahren beteiligten Einheiten (erstes Kommunikationsendgerät KEG A, Vermittlungsstelle SSP, Abrechnungssystem SCP, Anrufbeantworter VMS und zweites Kommunikationsendgerät KEG B) entsprechen den in der Figur 1 dargestellten Elementen.

Zu Beginn des Verfahrens wählt ein erster Kommunikationsteilnehmer A an dem ersten Kommunikationsendgerät KEG A die Telefonnummer (VoiceMailSystem Number) seines Anrufbeantworters VMS. Daraufhin sendet das erste Kommunikationsendgerät KEG A eine Rufaufbaunachricht "Call setup" (Call setup(CgPN, CdPN = VoiceMailSystem number)) an die Vermittlungsstelle SSP. Mit dieser Nachricht werden als Parameter die Telefonnummer (CgPN = Calling Party Number) des ersten Kommunikationsendgerätes KEG A und die Telefonnummer (Called Party Number CdPN = VoiceMailSystem number) des Anrufbeantworters VMS übertragen. Die Vermittlungsstelle SSP erkennt aufgrund eines in der Vermittlungsstelle vorhandenen und bereits vor Verfahrensbeginn armierten ("scharf geschalteten") Triggerpunktes O-CSI (O-CSI Trigger = Originating CAMEL Subscription Information Trigger), dass es sich bei dem ersten Kommunikationsendgerät KEG A um ein Kommunikationsendgerät handelt, für das Gebühren über ein vorausbezahltes Guthaben abgerechnet werden. Daher sendet die erste Vermittlungsstelle eine Startnachricht IDP (IDP = Initial Detection Point) an das Abrechnungssystem SCP. Mittels dieser Startnachricht IDP wird neben der Telefonnummer (CgPN) des ersten Kommunikationsendgerätes KEG A auch die Telefonnummer (CdPN) des Anrufbeantworters übertragen. Die Telefonnummer des Anrufbeantworters stellt ein Kennzeichen des Anrufbeantworters VMS dar. Das Abrechnungssystem SCP überprüft daraufhin, ob für das erste Kommunikationsendgerät KEG A ein vorausbezahltes Guthaben zur Abrechnung von Telekommunikationsverbindungen vorhanden ist. Im Ausführungsbeispiel soll angenommen werden, dass ein ausreichendes Guthaben vorhanden ist und dass Informationen über dieses Guthaben bei dem Abrechnungssystem gespeichert sind. Daraufhin sendet das Abrechnungssystem eine erste Abrechnungsnachricht AC1 an die Vermittlungsstelle SSP (dieser Schritt ist optional). Mit dieser Abrechnungsnachricht AC1 werden Informationen über das Guthaben an die Vermittlungsstelle gesendet, beispielsweise kann ein bestimmter Teilbetrag dieses Guthabens an die Vermittlungsstelle gesendet und damit zum Verbrauch bei Durchführung einer Telekommunikationsverbindung freigegeben werden. Weiterhin wird durch die erste Abrechnungsnachricht die Vermittlungsstelle angeregt, die später aufzubauende Telekommunikationsverbindung zu überwachen und Überwachungsinformationen an das Abrechnungssystem zu senden.

In einem nächsten Schritt sendet das Abrechnungssystem SCP eine Nachricht "Request Report BCSM Event" (RRB1(DP9R)) an die Vermittlungsstelle SSP. Mittels dieser Nachricht wird der "Detection Point 9" im "Request Mode" armiert; dieser Detection Point wird auch als Disconnect-Detection Point bezeichnet.

Schließlich sendet das Abrechnungssystem SCP eine Nachricht "Continue" (CUE) an die Vermittlungsstelle SSP. Daraufhin baut die Vermittlungsstelle SSP eine erste Telekommunikationsverbindung V1 zwischen dem ersten Kommunikationsendgerät KEG A und dem Anrufbeantworter VMS auf. Dazu wird in bekannter Weise eine Nachricht "Initial Adress Message" (IAM) von der Vermittlungsstelle an den Anrufbeantworter VMS gesendet; der Anrufbeantworter VMS sendet als Antwort die Nachricht "Answer" an die Vermittlungsstelle SSP. Die erste Telekommunikationsverbindung V1 wird durch die Vermittlungsstelle SSP überwacht, beispielsweise wird von der Vermittlungsstelle SSP die Dauer der ersten Telekommunikationsverbindung V1 registriert.

Über die erste Kommunikationsverbindung V1 wird durch das erste Kommunikationsendgerät KEG A eine von dem zweiten Kommunikationsendgerät KEG B stammende, auf dem Anrufbeantworter VMS gespeicherte Nachricht N ausgelesen; die Nachricht N wird abgehört. Nach Abhören dieser Nachricht N liegt im Ausführungsbeispiel bei dem ersten Kommunikationsendgerät KEG A der Wunsch vor, direkt mit dem zweiten Kommunikationsendgerät KEG B verbunden zu werden (um beispielsweise direkt auf die abgehörte Nachricht zu reagieren). Daher sendet das erste Kommunikationsendgerät KEG A ein Verbindungswunschsignal D in Form eines DTMF-Signals an den Anrufbeantworter VMS. Der Anrufbeantworter VMS reagiert auf das Verbindungswunschsignal D, in dem er mittels einer Nachricht "Release" ein Kennzeichen KB des zweiten Kommunikationsendgerätes KEG B in Form der Telefonnummer des zweiten Kommunikationsendgerätes KEG B an die Vermittlungsstelle SSP übermittelt. Bei dem Anrufbeantworter VMS ist nämlich zusammen mit der dort abgespeicherten Nachricht N auch der Absender dieser Nachricht gespeichert, im Ausführungsbeispiel ist das das zweite Kommunikationsendgerät KEG B der Absender. Dieses Kennzeichen KB des zweiten Kommunikationsendgerätes KEG B wird als ISUP-Parameter "User2UserInfo" mittels der ISUP-Nachricht "Release" an die Vermittlungsstelle SSP übertragen. Von der Vermittlungsstelle SSP wird das Kennzeichen KB zwischengespeichert. Daraufhin wird von der Vermittlungsstelle SSP auf die Nachricht "Release" hin die erste Telekommunikationsverbindung V1 beendet.

Die Vermittlungsstelle SSP beendet die Überwachung der ersten Telekommunikationsverbindung V1 und sendet Überwachungsinformationen mittels einer ersten Überwachungsnachricht "Apply Charging Report" ACR1 an das Abrechnungssystem SCP zurück. Diese Überwachungsinformationen enthalten im Ausführungsbeispiel die Angabe, welchen Betrag des voraus bezahlten Guthabens während der ersten Telekommunikationsverbindung V1 aufgebraucht worden ist und wie hoch ein ggf. noch vorhandener Guthabenrestbetrag ist.
Aufgrund der Nachricht ACR1 kann nun das Abrechnungssystem SCP die während der ersten Telekommunikationsverbindung V1 verbrauchten Guthabenbeträge von dem vorausbezahlten Guthaben abziehen und damit eine Abrechnung der ersten Telekommunikationsverbindung V1 vornehmen. (Das Überwachen der ersten Telekommunikationsverbindung V1, das Senden der Nachricht "Apply Charging Report" ACR1 an das Abrechnungssystem SCP und die beim Abrechnungssystem erfolgende Abrechnung der Gebühren für die erste Telekommunikationsverbindung sind optional und können auch weggelassen werden.)

Von der Vermittlungsstelle SSP wird jetzt mittels des zwischengespeicherten Kennzeichens KB des zweiten Kommunikationsendgeräts eine Abrechung einer später (zwischen dem ersten Kommunikationsendgerät KEG A und dem zweiten Kommunikationsendgerät KEG B) aufzubauenden zweiten Telekommunikationsverbindung V2 vorbereitet. Diese Vorbereitung erfolgt so, dass von der Vermittlungsstelle das Kennzeichen KB des zweiten Kommunikationsendgeräts an das Abrechnungssystem SCP übertragen wird. Aufgrund des armierten "Detection Points 9" erkennt die Vermittlungsstelle SSP nämlich, dass die erste Telekommunikationsverbindung V1 beendet worden ist. Daraufhin sendet die Vermittlungsstelle SSP mittels einer Nachricht "Event Report BCSM" ERB1 eine Information über das Ende der ersten Telekommunikationsverbindung V1 an das Abrechnungssystem SCP. Mittels des Parameters "User2UserInfo" der Nachricht "Event Report BCSM" wird das Kennzeichen KB des zweiten Kommunikationsendgerätes KEG B an das Abrechnungssystem SCP übermittelt.

Nach Empfang des Kennzeichens KB des zweiten Kommunikationsendgerätes überprüft das Abrechnungssystem SCP, ob für das erste Kommunikationsendgerät ein ausreichend großes vorausbezahltes Guthaben zur Abrechnung von weiteren Telekommunikationsverbindungen vorhanden ist. Wenn ein solches Guthaben vorliegt, dann sendet das Abrechnungssystem SCP Informationen über dieses Guthaben mittels einer Nachricht AC2 an die Vermittlungsstelle SSP. Durch die zweite Abrechnungsnachricht AC2 wird die Vermittlungsstelle SSP angeregt, die später aufzubauende zweite Telekommunikationsverbindung V2 zu überwachen und Überwachungsinformationen an das Abrechnungssystem zu senden.

Weiterhin sendet das Abrechnungssystem SCP eine Nachricht "Request Report BCSM Event" (RRB2(DP9R)) an die Vermittlungsstelle SSP. Mit dieser Nachricht wird wieder der Detection Point 9 (Disconnect-Detection Point) im Request Mode armiert. Weiterhin sendet das Abrechnungssystem SCP eine Verbindungsnachricht Connect (CON(KB)) an die Vermittlungsstelle SSP. Nach Erhalt dieser Verbindungsnachricht baut die Vermittlungsstelle SSP die zweite Telekommunikationsverbindung V2 zwischen den ersten Kommunikationsendgerät KEGA und dem zweiten Kommunikationsendgerät KEGB auf. Dies geschieht in bekannter Weise dadurch, dass die Vermittlungsstelle SSP eine Nachricht "Initial Address Message" (IAM) an das zweite Kommunikationsendgerät KEG B sendet und das zweite Kommunikationsendgerät KEG B mit der Nachricht "Answer" antwortet.

Über die zweite Telekommunikationsverbindung V2 wird nun ein Telefonat zwischen dem ersten Kommunikationsendgerät KEG A und dem zweiten Kommunikationsendgerät KEG B durchgeführt. Die Vermittlungsstelle SSP überwacht diese zweite Telekommunikationsverbindung und stellt fortlaufend fest, um welche Gebührenbeträge das voraus bezahlte Guthaben zu vermindern ist.

Schließlich wird die zweite Telekommunikationsverbindung V2 beendet, indem das zweite Kommunikationsendgerät KEG B eine Nachricht "Release" an die Vermittlungsstelle SSP sendet. Die Vermittlungsstelle SSP erkennt aufgrund des armierten Detection Points 9 das Ende dieser zweiten Telekommunikationsverbindung, beendet die Überwachung der zweiten Telekommunikationsverbindung und sendet mit einer zweiten Überwachungsnachricht ACR2 Überwachungsinformationen (z.B. in Form der verbrauchten Guthabenbeträge) an das Abrechnungssystem SCP zurück. Daraufhin rechnet das Abrechnungssystem SCP auch die Gebühren für die zweite Telekommunikationsverbindung V2 ab, indem das Abrechnungssystem SCP den voraus bezahlten Guthabenbetrag um den verbrauchten Betrag vermindert.

Aufgrund des armierten Detection Points 9 sendet die Vermittlungsstelle SSP eine Nachricht "Event Report BCSM" (ERB2(DP9R)) an das Abrechnungssystem in Form des Dienstesteuerungspunktes SCP. Damit übergibt die Vermittlungsstelle die Kontrolle über den weiteren Verfahrensablauf an den Dienstesteuerungspunkt SCP.

Im Weiteren können zwei Alternativen durchgeführt werden. Bei der ersten Alternative sendet das Abrechnungssystem SCP eine dritte Abrechnungsnachricht AC3 und eine weitere Verbindungsnachricht "Connect" (CON(VMS)) an die Vermittlungsstelle SSP. Damit wird eine dritte Telekommunikationsverbindung zwischen dem ersten Kommunikationsendgerät KEGA und dem Anrufbeantworter VMS aufgebaut, über die seitens des ersten Kommunikationsendgerätes KEGA eine weitere auf dem Anrufbeantworter gespeicherte Nachricht abrufbar ist (dies ist in der Figur 2 nicht dargestellt). Mittels der dritten Abrechnungsnachricht AC3 wird die Vermittlungsstelle SSP in bekannter Weise dazu angeregt, auch diese dritte Telekommunikationsverbindung zu überwachen. Daraufhin kann in bekannter Weise die dritte Telekommunikationsverbindung aufgebaut werden, indem die Vermittlungsstelle SSP eine weitere Nachricht IAM an den Anrufbeantworter VMS sendet und der Anrufbeantworter VMS mit einer weiteren Nachricht "Answer" antwortet. Nun können sich die oben angegebenen Verfahrensschritte wiederholen.

In einem weiteren Ausführungsbeispiel kann aber auch die im Folgenden beschriebene Alternative durchgeführt werden: Von dem Abrechnungssystem SCP wird die Abfrage des Anrufbeantworters beendet. Dies geschieht, indem das Abrechnungssystem SCP eine Nachricht "Release Call" an die Vermittlungsstelle SSP sendet.

Bei dem beschriebenen Verfahren ist besonders vorteilhaft, dass die erste Telekommunikationsverbindung V1 und/oder die zweite Telekommunikationsverbindung V2 von dem Abrechnungssystem z. B. unter Nutzung eines vorausbezahlten Guthabens abgerechnet werden können. Aufgrund des Abbruchs der ersten Telekommunikationsverbindung V1 durch Senden der Nachricht "Release(User2UserInfo=KB)" und Aufbau einer von der ersten Telekommunikationsverbindung unabhängigen zweiten Telekommunikationsverbindung ist es sogar möglich, durch Verwendung von verschiedenen Abrechnungsnachrichten verschiedene Abrechnungstarife zur Anwendung zu bringen. Damit ergibt sich vorteilhafterweise ein Verfahren, mit dem auch Telekommunikationsverbindungen, die unter Nutzung von auf einem Anrufbeantworter gespeicherten Nachrichten aufgebaut werden, mittels eines Prepaid-Abrechnungssystems unter Nutzung von vorausbezahlten Guthaben abgerechnet werden können. Weiterhin ist vorteilhaft, dass das Kennzeichen KB des zweiten Kommunikationsendgerätes mittels des ISUP-Parameters "User2UserInfo" übertragen wird, was eine problemlose Übertragung auch über Grenzen von Telekommunikationsnetzen hinweg ermöglicht. Das erste Kommunikationsendgerät kann sich also z.B. in einem ersten Telekommunikationsnetz (z.B. in einem ersten Mobilfunknetz) befinden, während sich der Anrufbeantworter in einem zweiten Telekommunikationsnetz (z.B. einem zweiten Mobilfunknetz) befindet. Das erste und das zweite Telekommunikationsnetz können dabei auch von verschiedenen Netzwerkoperatoren verwaltet werden.

## Patentansprüche

1. Verfahren zum Aufbauen von Telekommunikationsverbindungen unter Nutzung von auf einem Anrufbeantworter (VMS) gespeicherten Nachrichten, wobei bei dem Verfahren
- mittels einer Vermittlungsstelle (SSP) eine erste Telekommunikationsverbindung (V1) zwischen einem ersten Kommunikationsendgerät (KEG A) und dem Anrufbeantworter (VMS) aufgebaut wird,
- über die erste Telekommunikationsverbindung (V1) von dem ersten Kommunikationsendgerät (KEG A) eine von einem zweiten Kommunikationsendgerät (KEG B) stammende, auf dem Anrufbeantworter (VMS) gespeicherte Nachricht (N) ausgelesen wird,
- auf ein Verbindungswunschsignal (D) des ersten Kommunikationsendgeräts (KEG A) hin von dem Anrufbeantworter (VMS) ein Kennzeichen (KB) des zweiten Kommunikationsendgeräts (KEG B) an die Vermittlungsstelle (SSP) übermittelt wird,
- die erste Telekommunikationsverbindung (V1) beendet wird,
- von der Vermittlungsstelle (SSP) das Ende der ersten Telekommunikationsverbindung (V1) erkannt wird,
- von der Vermittlungsstelle (V1) mittels des Kennzeichens (KB) des zweiten Kommunikationsendgeräts (KEG B) eine Abrechnung einer zweiten Telekommunikationsverbindung (V2) zwischen dem ersten Kommunikationsendgerät (KEG A) und dem zweiten Kommunikationsendgerät (KEG B) vorbereitet wird, und
- daraufhin von der Vermittlungsstelle (SSP) die zweite Telekommunikationsverbindung (V2) aufgebaut wird.

2. Verfahren nach Anspruch 1,
**dadurch gekennzeichnet, dass**
- von der Vermittlungsstelle (SSP) die Abrechnung der zweiten Telekommunikationsverbindung (V2) vorbereitet wird, indem von der Vermittlungsstelle das Kennzeichen (KB) des zweiten Kommunikationsendgeräts (KEG B) an ein Abrechnungssystem (SCP) übertragen wird, und
- von der Vermittlungsstelle (SSP) nach Erhalt einer von dem Abrechnungssystem (SCP) stammenden zweiten Abrechnungsnachricht (AC2) die zweite Telekommunikationsverbindung (V2) aufgebaut wird.

3. Verfahren nach Anspruch 2,
**dadurch gekennzeichnet, dass**
- durch die zweite Abrechnungsnachricht (AC2) die Vermittlungsstelle (SSP) angeregt wird, die zweite Telekommunikationsverbindung (V2) zu überwachen und Überwachungsinformationen an das Abrechnungssystem (SCP) zu senden (ACR2).

4. Verfahren nach einem der Ansprüche 1 bis 3,
**dadurch gekennzeichnet, dass**
- nach Empfang des Kennzeichens (KB) des zweiten Kommunikationsendgeräts (KEG B) von dem Abrechnungssystem (SCP) überprüft wird, ob für das erste Kommunikationsendgerät (KEG A) ein vorausbezahltes Guthaben zur Abrechnung von Telekommunikationsverbindungen vorhanden ist, und
- bei Vorliegen eines solchen Guthabens Informationen über das Guthaben an die Vermittlungsstelle (SSP) gesendet (AC2) werden.

5. Verfahren nach einem der vorhergehenden Ansprüche,
**dadurch gekennzeichnet, dass**
- vor dem Aufbau der ersten Telekommunikationsverbindung (V1) von der Vermittlungsstelle (SSP) ein Kennzeichen (CdPN) des Anrufbeantworters (VMS) an das Abrechnungssystem (SCP) übertragen wird, und
- von der Vermittlungsstelle (SSP) nach Erhalt einer von dem Abrechnungssystem (SCP) stammenden ersten Abrechnungsnachricht (AC1) die erste Telekommunikationsverbindung (V1) zwischen dem ersten Kommunikationsendgerät (KEG A) und dem Anrufbeantworter (VMS) aufgebaut wird.

6. Verfahren nach Anspruch 5,
**dadurch gekennzeichnet, dass**
- durch die erste Abrechnungsnachricht (AC1) die Vermittlungsstelle (SSP) angeregt wird, die erste Telekommunikationsverbindung (V1) zu überwachen und Überwachungsinformationen an das Abrechnungssystem (SCP) zu senden (ACR1).

7. Verfahren nach Anspruch 5 oder 6,
**dadurch gekennzeichnet, dass**
- nach Empfang des Kennzeichens (CdPN) des Anrufbeantworters (VMS) von dem Abrechnungssystem (SCP) überprüft wird, ob für das erste Kommunikationsendgerät (KEG A) ein vorausbezahltes Guthaben zur Abrechnung von Telekommunikationsverbindungen vorhanden ist, und
- bei Vorliegen eines solchen Guthabens Informationen über das Guthaben an die Vermittlungsstelle (SSP) gesendet (AC1) werden.

8. Verfahren nach einem der vorhergehenden Ansprüche,
**dadurch gekennzeichnet, dass**
- als Verbindungswunschsignal ein DTMF-Signal (D) verwendet wird.

9. Verfahren nach einem der vorhergehenden Ansprüche,
**dadurch gekennzeichnet, dass**
- nach Beendigung der zweiten Telekommunikationsverbindung (V2) von der Vermittlungsstelle (SSP) eine dritte Telekommunikationsverbindung (V3) zwischen dem ersten Kommunikationsendgerät (KEG A) und dem Anrufbeantworter (VMS) aufgebaut wird, über die eine weitere auf dem Anrufbeantworter (VMS) gespeicherte Nachricht abrufbar ist.
